# EUROPEAN PATENT SPECIFICATION

(11) **EP 2 402 178 B1**
(45) Date of publication and mention of the grant of the patent: **20.07.2016**
(21) Application number: 10745977.8
(22) Date of filing: 24.02.2010
(51) Int. Cl.: B60C 11/16, B60C 11/00, B60C 11/01, B60C 11/12

(54) **STUDDABLE TIRE**
BESPIKEBARER REIFEN
PNEUMATIQUE À CLOUTER

(30) Priority: 24.02.2009 JP 2009041242
(43) Date of publication of application: 04.01.2012
(73) Proprietor: Bridgestone Corporation, Tokyo 104-8340 (JP)
(72) Inventor: YAMAMOTO, Tomomichi, Kodaira-shi Tokyo 187-8531 (JP)
(74) Representative: Oxley, Robin John George
(86) International application number: PCT/JP2010/001250
(87) International publication number: WO 2010/098092

(56) References cited:
- FR-A- 1 353 441
- JP-A- 51 089 605
- JP-A- S59 216 705
- JP-A- 2003 267 004
- JP-A- 2007 050 718
- JP-U- 60 152 501
- Ge_altimax_arctic_ci2_l ET AL: "General Tire Altimax Arctic", internet, 20 December 2007 (2007-12-20), XP055098043, Retrieved from the Internet: URL:http://www.tirerack.com/images/tires/g eneral/ge_altimax_arctic_ci2_l.jpg [retrieved on 2014-01-23]

## Description

### TECHNICAL FIELD

The present invention relates to a studdable tire, and especially to a studdable tire which can especially improve an on-ice performance of a studded tire configured by inserting studs into the studdable tire.

### RELATED ART

A studded tire which is configured by inserting studs into a studdable tire have many studs arranged in different positions in blocks in the width direction of the tread, and, for example, a cylindrical portion of a tip pin which is a tip of the stud and is projected from the tread surface scratches the ice to increase the friction resistance of the tire, thereby securing high driving and braking performances on the ice.

With regard to the arrangement of the studs on the tread, Patent Document 1, for example, discloses a pneumatic tire which has a block pattern consisting of a plurality of blocks provided with studs. In a region of the tread which is located at the inner side of a vehicle when the tire is mounted on the vehicle, the blocks are arranged so that the direction of their stiffness is generally along the tire circumferential direction. In a region of the tread which is located at the outer side of a vehicle when the tire is mounted on the vehicle, the blocks are arranged so that the direction of their stiffness is inclined with respect to the tire width direction.

In the tire disclosed in Patent Document 1, when the stud inserted into the blocks are arranged so that their positions in the tread width direction are identical with or close to each other between the adjacent blocks in the tread circumferential direction. Thus, the studs scratch regions of the ice surface overlapping with each other during the rotation of the tire, which is likely not to be able to obtain a desired ice performance.

### Patent Document

Patent Document 1: JP 2006192955 A Reference is also made to JP 59-216705, FR 1353441 and Ge_altimax_arctic_ci2_l ET AL: "General Tire Altimax Arctic", internet. 20 December 2007 (2007-12-20), Retrieved on 2014-01-23 from the Internet: URL:http://www.tirerack.com/images/tires/general/ge_altimax_arctic_ci2_1.jpg.

### DISCLOSURE OF THE INVENTION

### PROBLEMS TO BE SOLVED BY THE INVENTION

The present invention provides a studdable tire capable of remarkably improving an on-ice performance of a studded tire configured by inserting studs into the studdable tire.

### MEANS FOR SOLVING THE PROBLEM

The studdable tire according to the present invention is as set out in Claim 1 and has a tread, one or more circumferential grooves extending in the tread circumferential direction, plural lateral grooves extending in the tread width direction to open into the circumferential grooves, and a block array defined by the circumferential grooves and the lateral grooves, and is characterized in that holes for inserting studs are arranged in blocks constituting the block array so that the holes within the tire contact area of the tread do not overlap with each other in the tread circumferential direction.

The term "not overlap with each other in the tread circumferential direction" as used herein means that traces of the scratches on the ice produced by the studs inserted into the holes do not overlap, and, more specifically, projection images of the studs in the tread circumferential direction have no overlap therebetween.

The holes are arranged on respective imaginary lines extending in the tread circumferential direction with even spaces therebetween in the tread width direction. The term "even spaces" as used herein refers to spaces having generally equal lengths including manufacturing variations.

The imaginary lines are drawn on the tread surface under a condition where a pneumatic tire is mounted on a standard rim specified in the industrial standard effective in the place of use or manufacturing of the tire such as JATMA (Japan Automobile Tyre Manufacturing Association) in Japan, ETRTO (European Tyre and Rim Technical Organisation) STANDARD MANUAL in Europe and TRA (THE TIRE and RIM ASSOCIATION INC.) YEAR BOOK in the United States of America, and the maximum air pressure defined in the standard such as JATMA according to the tire size is filled as internal pressure.

The holes adjacent in the tread circumferential direction are preferably spaced with one or more imaginary lines existing therebetween in the tread width direction.

In addition, the holes are preferably arranged in the blocks constituting a shoulder block array located outermost in the tread width direction among the block arrays.

Meanwhile, inclined grooves inclinedly extending with respect to the tread circumferential direction from the lateral grooves are provided so that corresponding positions of respective inclined grooves opening to the lateral grooves are agreed with each other in the tread width direction.

### EFFECT OF THE INVENTION

The studdable tire according to the present invention is provided with holes for inserting studs which are arranged in blocks constituting the block array so that the holes within the tire contact area do not overlap with each other in the tread circumferential direction. Each block has a different placement position of the holes for inserting studs in the tire width direction, and, preferably, many holes are evenly distributed in the tread width direction. Therefore, the studs scratch the different places on the ice road, which can improve the driving performance and the braking performance on the ice due to an effect of large scratches of the stud.

### BRIEF DESCRIPTION OF THE DRAWINGS

[Fig. 1] A development view a part of a tread patter of one embodiment of the studdable tire according to the present invention.
[Fig. 2] A development view a part of a tread patter of another embodiment of the studdable tire according to the present invention.
[Fig. 3] A development view a part of a tread patter of another embodiment of the studdable tire according to the present invention.
[Fig. 4] A development view a part of a tread patter of another embodiment of the studdable tire according to the present invention.
[Fig. 5] A side view of one example of the stud to be inserted in the studdable tire.
[Fig. 6] Fig. 6(a) is a perspective view of the stud shown in Fig. 5. Figs. 6 (b)-(e) are perspective views of another embodiment of the stud.
[Fig. 7] Fig. 7(a) shows a road surface after the studdable tire according the present invention is mounted on the vehicle body and driven on the ice condition.
Fig. 7(b) is an enlarged view of a part of Fig. 7(a)

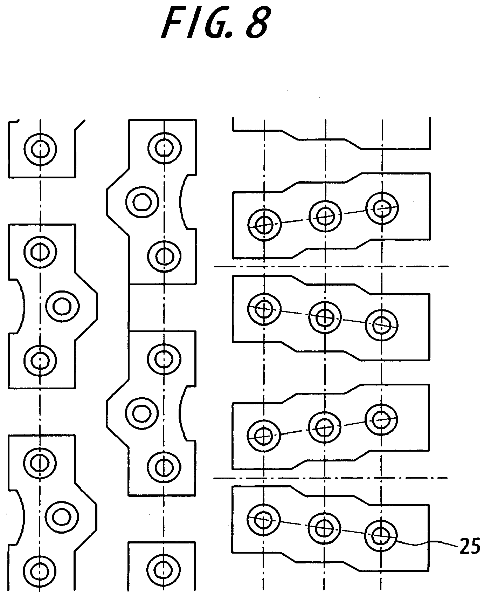

[Fig. 8] A development view of a part of the tread pattern of a conventional studdable tire.

### MODE FOR CARRYING OUT THE INVENTION

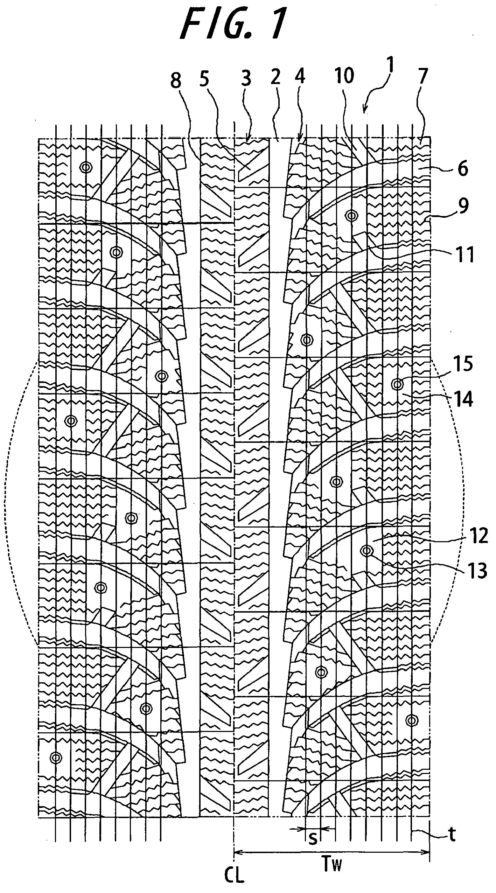

Hereinafter, a pneumatic tire according to the present invention will be discussed in detail with reference to the drawings. Fig. 1 is a development view of a part of a tread patter of one embodiment of the pneumatic tire according to the present invention. Reinforcing structures in the tire are similar to those used in a common radial tire or a common bias tire, so that they are not shown in the drawings.

In the drawings, the reference numeral 1 denotes a tread surface which is provided with one or more circumferential grooves extending in the tread circumferential direction. In this figure, the circumferential grooves are center circumferential grooves 2 which are arranged in vicinity to a tire equatorial line CL and which have a linear shaped groove walls at the tire equatorial line CL side and zigzag shaped groove walls at the tread end side. In this figure, the tire equatorial line CL and the center circumferential grooves define center land portions 3 therebetween, and the center circumferential grooves 2 and the tread ends defines shoulder blocks 4 therebetween.

The center land portion 3 is provided with a lateral groove 5 which inclinedly extends with respect to the tread circumferential direction from the center circumferential direction 2 and terminates in the center land portion. In the shoulder land portion 4, block arrays are defined by lateral grooves 6 consisting of a plurality of shoulder blocks 7 which inclinedly extends with respect to the tread circumferential direction and opens to the center circumferential groove 2.

The land portions 3, 4 are provided with zigzag shaped sipes 8, 9, respectively, extending generally in the tread circumferential direction.

The shoulder block 7 are provided with an inclined groove 10 opening to adjacent lateral grooves 6 and a cutout groove 11 terminating in the block. Corresponding positions of respective inclined grooves opening to the lateral grooves 6 are agreed with each other in the tread width direction.

In the shoulder blocks 7 of the shown pneumatic tire, holes 13 for inserting studs are formed in flat portions 12 defined by the sipes 9 and the cutout grooves 11, and holes 15 for inserting studs are formed in flat area 14 surrounded by the sipes 9. The holes 13, 15 are placed so that they do not overlap with each other in the tread circumferential direction. Preferably, only one hole 13, 15 is arranged within the tire contact area of the tread in the tread circumferential direction.

The center circumferential groove 2 may have, for example, a groove width of 11 mm-14 mm and a groove depth of 9.0 mm-10 mm. The lateral grooves 5, 6 may have, for example, a groove width of 8.0 mm-11.0 mm and a groove depth of 9.0 mm-10.0 mm. The inclined grove 8 and the cutout groove 11 may have, for example, a groove width of 5.0 mm-6.0 mm and a groove depth of 4.5 mm-5.0 mm. The sipes 8, 9 may have, for example, a sipe extending length of 20 mm-40 mm and a sipe depth of 6.5 mm-7.5 mm.

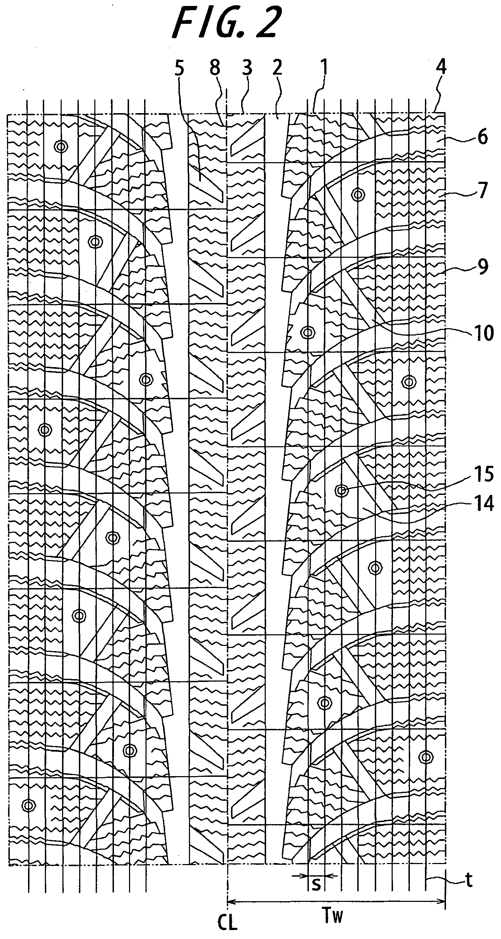

Fig. 2 is a sectional view of a half of an embodiment of a pneumatic tire which is not according to the present invention taken along the meridian. The same reference numerals as those in the preceding Fig. 1 are given to like elements, and a description thereof will be omitted. In this embodiment, the cutout groove is not provided, instead the inclined grooves 10 are provided in the shoulder blocks 7. The holes 15 for inserting studs are formed in the flat area 14 surrounded by the sipes 9. The holes 15 are placed so that they do not overlap with each other in the tread circumferential direction. The positions of inclined grooves 10 opening to the lateral grooves 6 are not agreed with each other in the tread width direction, and shifted in the tread width direction in accordance with the positions of the holes 15.

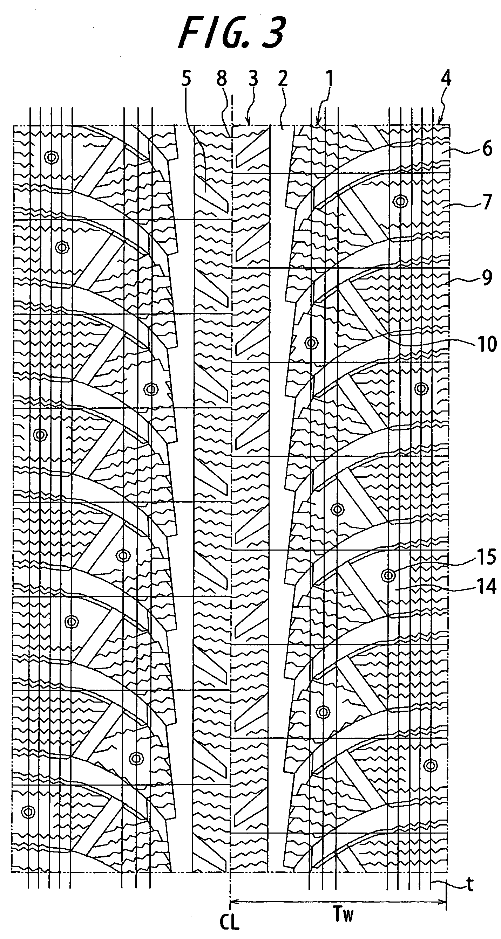

Fig. 3 is a sectional view of a half of another embodiment of a pneumatic tire according to the present invention taken along the meridian. The same reference numerals as those in the preceding Fig. 1 are given to like elements, and a description thereof will be omitted. In this embodiment, the cutout groove is not provided, instead the inclined grooves 10 are provided in the shoulder blocks 7. The holes 15 for inserting studs are formed in the flat area 14 surrounded by the sipes 9. The holes 15 are placed so that they do not overlap with each other in the tread circumferential direction. The positions of inclined grooves 10 opening to the lateral grooves 6 are agreed with each other in the tread width direction.

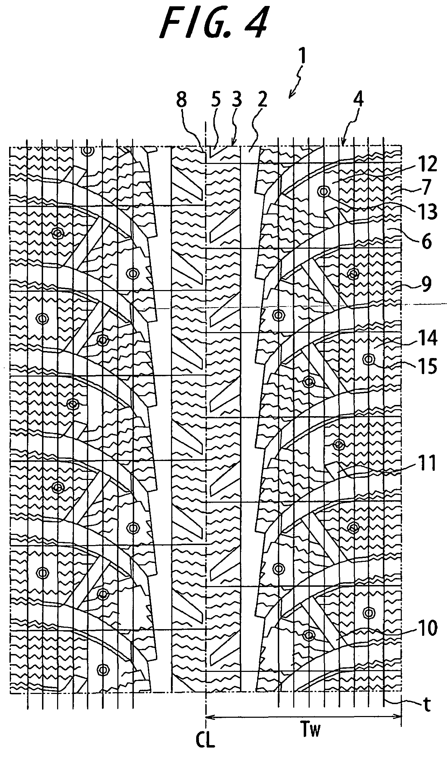

Fig. 4 is a sectional view of a half of another embodiment of a pneumatic tire according to the present invention taken along the meridian. The same reference numerals as those in the preceding Fig. 1 are given to like elements, and a description thereof will be omitted. In this embodiment, the holes 13 for inserting studs are formed in the flat portions 12 defined by the sipes 9 and the cutout groove 11, and the holes 15 for inserting studs are formed in the flat areas 14 surrounded by the sipes 9. The holes are placed so that they do not overlap with each other in the tread circumferential direction. Two holes 15 may be formed in one block 7. The formation of a plurality of the holes 15 in a block 7 can obtain larger flat area 14, which results in uniform block stiffness.

In such a tire, the holes are arranged on respective imaginary lines t extending on the tread surface 1 in the tread circumferential direction with even spaces s therebetween in the tread width direction. This configuration enables the studs to scratch the different places on the ice road, which increase the scratching effect of the studs.

The imaginary lines t are drawn, in the region located between 35%-90% of the tread half width Tw, and the spaces therebetween are 4mm-6mm. The studs tend to come off during the rotation of the tire when the studs are arranged in the region located inside of 35% or outside of 90% of the tread half width from the meridian.

The holes 13, 15 adjacent in the tread circumferential direction are preferably spaced with one or more imaginary lines t existing therebetween in the tread width direction. This configuration can improve the on-ice performance without decreasing the number of the studs in the tread circumferential direction and the spaces in the tread width direction between the studs adjacent in the tread circumferential direction.

The shoulder blocks 7 greatly contribute to the drivability on the ice road, so that the holes 13, 15 are preferably arranged in the shoulder blocks 7.

The positions of inclined grooves 10 and the cutout grooves 11 opening to the lateral grooves 6 are agreed with each other in the tread width direction. This configuration can improve the drainage performance without decreasing the on-ice performance.

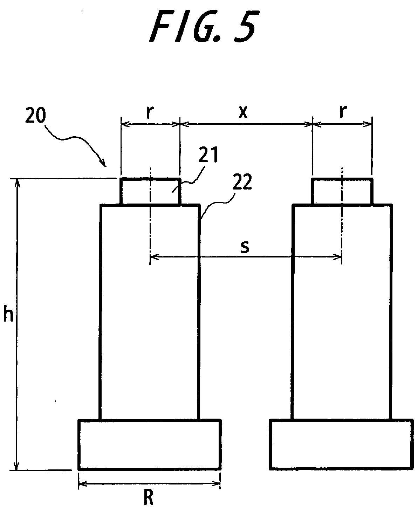

Fig. 5 is a side view of an example of the studs. In the figure, the reference numeral 20 generally denotes the stud, the reference numeral 21 denotes a tip pin which may be made of, for example, hard metals such as tungsten steel, and the reference numeral 22 denotes a flange portion arranged at the lower end of the tip pin 21 and integrally formed with the tip pin 21. The flange portion 22 has a diameter larger than that of the tip pin. The planar contour of the stud 21 is, for example, circular.

The stud 20 may have, for example, a tip pin 21 with the diameter r of about 2.5 mm, a body portion 22 with the diameter R of about 4.5 mm-6.0 mm, and a height h of 10 mm-12 mm. The space x between the tip pins 21 of the adjacent studs 20 in the tread width direction is, for example, 5.0 mm-7.0 mm.

The studs 20 are subjected to be used by embedding the flange portions 22 into the holes of the studdable tire. The stud tire formed by applying the studs to the studdable tire can increase the friction resistance with the tip pins 21, which project from the tread surface, scratching ice to exert the higher on-ice performance.

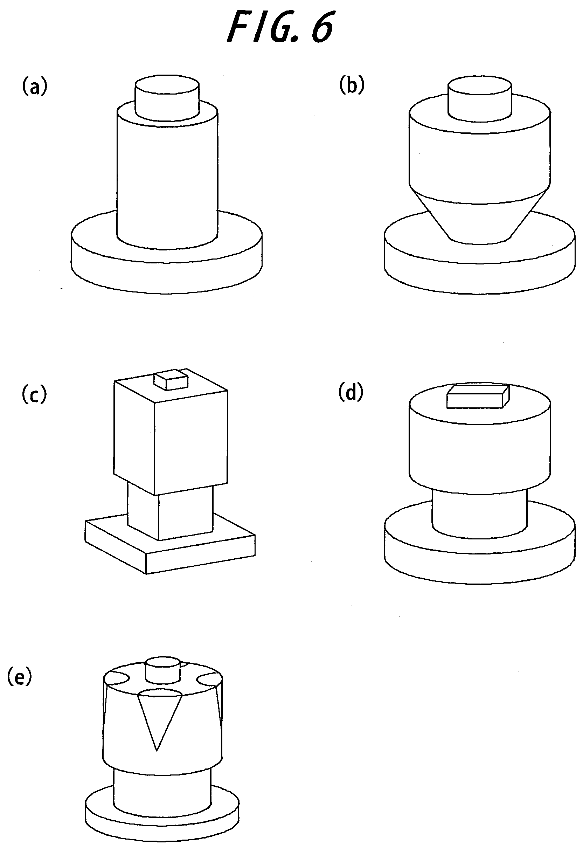

Fig. 6 (a) is a perspective view of the stud shown in Fig. 5, and Figs. 6(b)-6 (e) is perspective views showing another embodiments of the stud. The stud shown in Figs. 6 (b)-6(e) in addition to Fig. 6 (a) may be embedded in the holes of the studdable tire.

### EXAMPLE

Tires having configurations shown in the figures and a size of 195/65R15 were experimentally prepared. Example tires 1, 3 and 4, Reference Example 2 and Comparative tire of which specifications are shown in Table 1 were evaluated with regard to the on-ice property and the uneven-wear resistance in the winter of January and February. The stud used in the tires had the configuration shown in Fig. 5. The diameter r of the tip pin was 2.4 mm, the diameter R of the body portion was 4.5 mm (the diameter at the flange portion was 8.0 mm), and the height h of the stud was 11 mm. The configuration of Comparative tire needed not to be modified and was in accordance with those of Example tire.

**[Table 1]**

| | Example Tire 1 | Reference Example Tire 2* | Example Tire 3 | Example Tire 4 | Comparative Tire |
|---|---|---|---|---|---|
| Fig. | 1 | 2 | 3 | 4 | 7 |
| Number of ho les | 110 | 110 | 110 | 110 | 110 |
| Space s (mm) | 3.7 | 3.7 | irregular | 3.7 | irregular |
| Space x (mm) | 6.1 | 6.1 | irregular | 6.1 | irregular |

| | | | | | |
|---|---|---|---|---|---|
| * Not according to the invention. | | | | | |

### (On-ice performance)

Each of Example tires 1, 3 and 4, Reference Example 2 and Comparative tire was mounted on a rim with a rim size of 6.0 x 15 and inflated to have the inner pressure of 220 kPa. Then the tire/rim assemblies were attached to the front and rear wheels of Golf. Actual driving tests were carried out on an ice course made in a dedicated test course in Sweden where a stud tire was not regulated. The times needed for acceleration of the car speed from 0 km/h to 35 km/h were measured. The measured times are indicated in index values in Table 2 for the purpose of evaluation. It is noted that the index values in Table 2 are calculated with the value of Example tire 1 being as the control. The larger the index value is, the better the on-ice performance is.

### (Uneven-wear resistance)

Each of Example tires 1, 3 and 4, Reference Example 2 and Comparative tire was mounted on a rim with a rim size of 6.0 x 15 and inflated to have the inner pressure of 220 kPa. Then the tire/rim assemblies were attached to the front and rear wheels of Golf or the like. Actual driving tests were carried in the suburb of Moscow for about 15,000 km. The difference of the wear between the center land portion and the shoulder land portion were evaluated, and the averages are shown in Table 2. The smaller the value in the table is, the smaller the difference of the wear is, which means the better uneven-wear resistance.

**[Table 2]**

| | Example Tire 1 | Reference Example Tire 2* | Example Tire 3 | Example Tire 4 | Comparative Tire |
|---|---|---|---|---|---|
| On-ice Performance (%) | 100 | 100 | 95 | 100 | 91 |
| Uneven-wear resistance (mm) | 0.7 | 1.5 | 0.7 | 0.7 | 0.7 |

| | | | | | |
|---|---|---|---|---|---|
| * Not according to the invention. | | | | | |

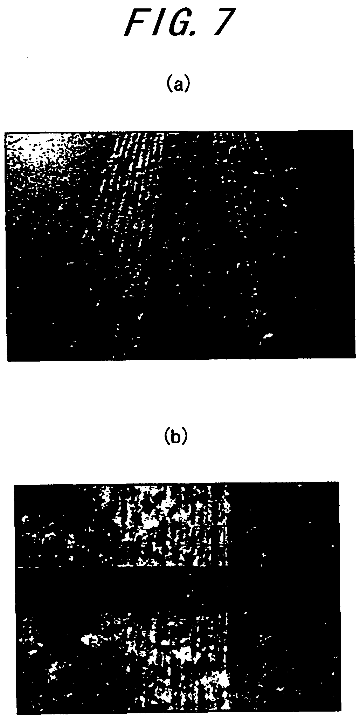

As shown in Table 2, Example tires 1, 3 and-4 could improve the on-ice performances without decreasing the uneven-wear resistances as compared to Comparative tire. Moreover, in Example tires 1, and 4, the studs were arranged with even spaces therebetween, as shown in Fig. 7. Thus, these tires could scratch the ice road surface evenly to improve the on-ice performance.

### EXPLANATION OF REFERENCE NUMERALS

- 1: tread surface
- 2: center circumferential groove
- 3: center land portion
- 4: shoulder land portion
- 5, 6: lateral groove
- 7: shoulder block
- 8, 9: sipe
- 10: inclined groove
- 11: cutout groove
- 12: flat portion
- 13, 15, 25: hole
- 14: flat area
- 20: stud
- 21: tip pin
- 22: flange portion

## Claims

1. A studdable tire having a tread, one or more circumferential grooves (2) extending in the tread circumferential direction, plural lateral grooves (5, 6) extending in the tread width direction to open into the circumferential grooves (2), and a block array (7) defined by the circumferential grooves (2) and the lateral grooves (5, 6), wherein holes (13, 15, 25) for inserting studs are arranged in blocks constituting the block array (7) so that, within the tire contact area of the tread, the holes (13, 15, 25) do not overlap with each other in the tread circumferential direction,
the holes (13, 15, 25) are arranged on respective imaginary lines (t) extending in the tread circumferential direction with even spaces therebetween in the tread width direction;
the imaginary lines (t) are drawn in the region located between 35% and 90% of the tread half width (Tw),
the spaces between the adjacent imaginary lines (t) are in the range 4mm-6mm; and
inclined grooves (10) inclinedly extending with respect to the tread circumferential direction from the lateral grooves (6) are provided so that corresponding positions of respective inclined grooves opening to the lateral grooves (6) are agreed with each other in the tread width direction.

2. The studdable tire according to claim 1, wherein the holes (13, 15, 25) adjacent in the tread circumferential direction are spaced with one or more of the imaginary lines existing therebetween in the tread width direction.

3. The studdable tire according to claim 1 or 2, wherein the holes (13, 15, 25) are arranged only in the blocks constituting a shoulder block array (7) located outermost in the tread width direction among the block arrays (7).

## Patentansprüche

1. Bespikebarer Reifen der Folgendes aufweist: eine Lauffläche, eine oder mehrere Umfangsrillen (2) die sich in der Laufflächenumfangsrichtung erstrecken, mehrere seitliche Rillen (5, 6) die sich in der Laufflächenbreitenrichtung erstrecken, um in die Umfangsrillen (2) einzumünden, und eine Blockanordnung (7) die durch die Umfangsrillen (2) und die seitlichen Rillen (5, 6) definiert wird, wobei Öffnungen (13, 15, 25) zum Einsetzen von Stiften in Blöcken, welche die Blockanordnung (7) bilden, angeordnet sind, so dass innerhalb des Reifenkontaktbereichs der Lauffläche die Öffnungen (13, 15, 25) sich nicht gegenseitig in der Laufflächenumfangsrichtung überlappen,
wobei die Öffnungen (13, 15, 25) auf jeweiligen imaginären Linien (t) angeordnet sind, die sich in der Laufflächenumfangsrichtung mit gleichmäßigen Zwischenräumen in der Laufflächenbreitenrichtung erstrecken,
wobei die imaginären Linien (t) im Bereich zwischen 35% und 90% der Hälfte der Laufflächenbreitenrichtung (Tw) gezogen werden,
wobei die Zwischenräume zwischen den benachbarten imaginären Linien (t) im Bereich von 4mm bis 6mm liegen, und
wobei geneigte Rillen (10) bereitgestellt werden, die sich schräg in Bezug zur Laufflächenumfangsrichtung von den seitlichen Rillen (6) aus erstrecken, so dass entsprechende Positionen von jeweiligen geneigten Rillen, die sich zu den seitlichen Rillen (6) hin öffnen, miteinander in der Laufflächenbreitenrichtung übereinstimmen.

2. Bespikebarer Reifen nach Anspruch 1, wobei die Öffnungen (13, 15, 25), die einander in der Laufflächenumfangsrichtung benachbart sind, um eine oder mehrere der dazwischen vorhandenen imaginären Linien in der Laufflächenbreitenrichtung beabstandet sind.

3. Bespikebarer Reifen nach Anspruch 1 oder 2, wobei die Öffnungen (13, 15, 25) lediglich in den Blöcken, die eine Schulterblockanordnung (7) darstellen, angeordnet sind, welche im äußersten Bereich der Laufflächenbreitenrichtung der Blockanordnungen (7) angeordnet sind.

## Revendications

1. Bandage pneumatique à clouter, comportant une bande de roulement, une ou plusieurs rainures circonférentielles (2) s'étendant dans la direction circonférentielle de la bande de roulement, plusieurs rainures latérales (5, 6) s'étendant dans la direction de la largeur de la bande de roulement et s'ouvrant dans les rainures circonférentielles (2), et un agencement de pavés (7) défini par les rainures circonférentielles (2) et les rainures latérales (5, 6), dans lequel des trous (13, 15, 25) pour l'insertion de clous sont formés dans des pavés constituant l'agencement de pavés (7), de sorte que, dans la zone contactant le bandage pneumatique de la bande de roulement, les trous (13, 15, 25) ne se chevauchent pas les uns les autres dans la direction circonférentielle de la bande de roulement ;
les trous (13, 15, 25) étant agencés sur des lignes imaginaires respectives (t), s'étendant dans la direction circonférentielle de la bande de roulement, avec des espaces égaux entre eux dans la direction de la largeur de la bande de roulement ;
les lignes imaginaires (t) étant tracées dans la région située entre 35% et 90% de la moitié de la largeur de la bande de roulement (Tw) ;
les espaces entre les lignes imaginaires adjacentes (t) étant comprises dans l'intervalle allant de 4 mm à 6 mm ; et
des rainures inclinées (10), s'étendant de manière inclinée par rapport à la direction circonférentielle de la bande de roulement à partir des rainures latérales (6), étant agencées de sorte que des parties correspondantes des rainures inclinées respectives s'ouvrant vers les rainures latérales (6) sont adaptées l'une à l'autre dans la direction de la largeur de la bande de roulement.

2. Bandage pneumatique à clouter selon la revendication 1, dans lequel les trous (13, 15, 25) adjacents dans la direction circonférentielle de la bande de roulement sont espacés par une ou plusieurs des lignes imaginaires existant entre eux dans la direction de la largeur de la bande de roulement.

3. Bandage pneumatique à clouter selon les revendications 1 ou 2, dans lequel les trous (3, 15, 25) sont agencés uniquement dans les pavés constituant un agencement de pavés d'épaulement (7), agencés en un point le plus externe, dans la direction de la largeur de la bande de roulement, parmi les agencements de pavés (7).
